Europäisches Patentamt

(19) European Patent Office

Office européen des brevets

(11) Publication number : **0 118 406**
**B1**

(12)                    EUROPEAN PATENT SPECIFICATION

(45) Date of publication of patent specification :
20.08.86

(51) Int. Cl.⁴ : **F 16 G   3/00, D 21 F   1/00**

(21) Application number : **84850063.3**

(22) Date of filing : **23.02.84**

(54) A belt-end joining device.

(30) Priority : **01.03.83 SE 8301118**

(43) Date of publication of application :
**12.09.84 Bulletin 84/37**

(45) Publication of the grant of the patent :
**20.08.86 Bulletin 86/34**

(84) Designated contracting states :
**AT BE CH DE FR GB IT LI NL SE**

(56) References cited :
EP-A- 0 041 232
FR-A-   661 032
FR-A- 2 263 425
FR-A- 2 339 806
FR-A- 2 469 599
US-A- 3 972 105

(73) Proprietor : **NORDISKAFILT AB**
**Gamletullsgatan 3**
**S-302 44 Halmstad (SE)**

(72) Inventor : **Nilsson, Sven-Bertil**
**Grimmerud**
**S-660 10 Dals-Langed (SE)**

(74) Representative : **Ryrlén, Evert et al**
**ALFONS HEDBERGS PATENTBYRÄ AB Aschebergs-**
**gatan 35**
**S-411 33 Göteborg (SE)**

## Description

The subject invention concerns a device designed to join together belt ends and more precisely belts the two ends of which are provided with first means for permanent joining together of the belt ends and with second means for temporary joining together of the belt ends, said second means positioned adjacent the belt ends and being removably secured thereto. The device in accordance with the invention is primarily intended for use in fabrics and felts of the various kinds which are used for drying paper webs in papermaking machines. However, the device in accordance with the invention may also find other applications within other technical fields.

The purpose of the invention is to design the belt and particularly its end portions in such a manner as to make it possible to join together the belt end portions in a rational and simple manner to make the belt endless.

The device in accordance with the teachings of the subject invention will be described in the following with reference to a preferred embodiment according to which the belt is a dryer screen in a papermaking machine. The two ends of the fabric are provided with first interconnection means for permanent joining together of the belt ends. These permanent interconnection means could be a row of loops, clips, helically wound means or the like designed to be arranged in interdigited or nesting relationship so as to form a channel into which at least one locking pintle or connector member may be inserted so as to extend along the entire length of the channel thus locking or fastening the belt seam or joint.

Certain problems are connected with the installation and exchange of dryer fabrics in papermaking machines. Normally, a fresh fabric is introduced into the papermaking machine in the following manner. One of the fabric ends is attached to the end of the old fabric, the latter being used to advance the fresh fabric over one turn through the machine. The old fabric is than removed and the ends of the fresh fabric are joined together, and thus an endless belt is formed. Since the fabric is heavy, wide and difficult to handle and manipulate considerable difficulties are encountered in positioning the locking loops in interdigited or nesting relationship and in introducing the locking pintle or seam connector through the channel formed by the interdigited locking loops. During the entire joining operation the seam area of the fabric must be maintained in a tension-free condition over the entire width of the fabric. When the locking pintle or seam connector is being introduced into the channel it is important that the loops which are already interconnected do not exert a pressure on the locking pintle, preventing it from being pushed further into the channel. Relief of pressure from the weight of the fabric off the seam area therefore is a prerequisite to allow locking pintle introduction. Handling of the fabric is also made more difficult because of the moist and hot air present in the papermaking machine. Another factor which may make the joining-together of the fabric ends difficult is that large sections of the fabric are supported on rotatable dryer cylinders. In addition fabric exchanges should be effected in the shortest possible time, since operational standstills of large papermaking machines are quite cost-consuming.

The FR-A-2 339 806 describes a method and a device for joining together two web ends for use in belts for papermaking machines. In accordance with the teachings of this patent application temporary connector means are arranged adjacent the belt ends and the connector means for permanent joining together of the belt ends. The means for temporary joining together of the belt ends consist, in accordance with the construction shown in this patent application, of a zip-type connector positioned above and immediately adjacent the means for permanent and definite joining together of the belt ends. Temporary joining together by means of a zip-type connector is, however, subject to certain drawbacks. The zip-type connector means fails to provide support to the seam area during the inter-connection of the belt ends by means of the permanent joining means. The two halves of the zip-type connector are attached to their respective one of the two belt ends and when the latter are joined together the locking loops of the permanent joining means must simultaneously be positioned in intermeshing relationship. As the interconnecting elements of the zip connector are displaced the tension present in the seam area must be relieved gradually.

The purpose of the subject invention is to obviate the disadvantages inherent in the prior-art devices and to disclose a device for joining together fabric ends, which device is designed in such a manner that the temporary interconnection of the fabric ends may be performed in a simple manner without giving cause to problems during installation or mounting. In addition, the fabric is well supported and fabric shape and stability are retained during the joining process of producing the permanent seam or joint, which makes the process and work in connection therewith easier to perform and reduces to a minimum the time necessary for establishing the seam joint.

To achieve these purposes the belt in accordance with the invention is characterised in that the second means devised consist of two intermeshing hook members, each one comprising a flat portion provided at one of its ends with a U-shaped part by means of which the hook members engage each other. In accordance with a preferred embodiment of the device, the flat portion of the second joining means serves as a support while the work of interconnecting the first means for the permanent belt joining together of the ends is in progress. Consequently, it is an advantage that the second means for the temporary joining together of the belt ends are arranged to ensure that the seam or joint that they form is offset relative to the seam or joint formed by the first joining means in such a manner that the latter will be positioned above the flat portion of the second joining means.

The device in accordance with the invention will be described in closer detail in the following with reference to the accompanying drawings, wherein

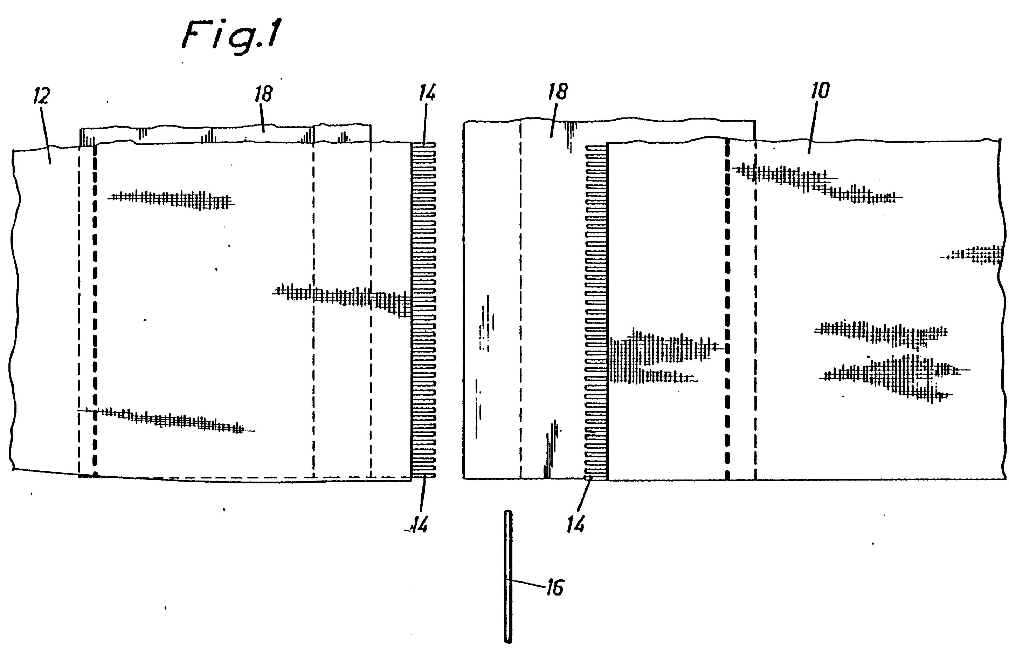

Figure 1 is a plan view of an end seam or joint in accordance with the invention for joining together the ends of a fabric, the two end seam or joint halves being shown in their non-interconnected position,

Figure 2 is a similar plan view of the end seam or joint in the interconnected, joined position thereof, and

Figure 3 is a lateral view of the end seam or joint showing the same position as Fig. 2.

The drawings show only part of the width of the fabric.

The invention is applicable to textile belts the two end portions 10, 12 of which are shown in the drawings. The belt is intended for use as the dryer fabric in a papermaking machine but a number of alternative uses and applications of the inventive object are possible. At the ends of the fabric loops 14 are provided. The loops are intended to be fitted into each other in intermeshing or interdigited relationship so as to form a channel extending across the entire width of the fabric. The channel is intended to receive therein a locking pintle or seam connector 16. The joining together of the fabric ends by means of the introduction of a locking pintle 16 through loops 14 is well known in the art. One problem inherent with this joining method is to so position the loops 14 at one fabric end relative to the loops 14 at the opposite end that it becomes possible to introduce the pintle wire 16. Another problem is to retain the loops in this correct relative position during the introduction of the wire 16.

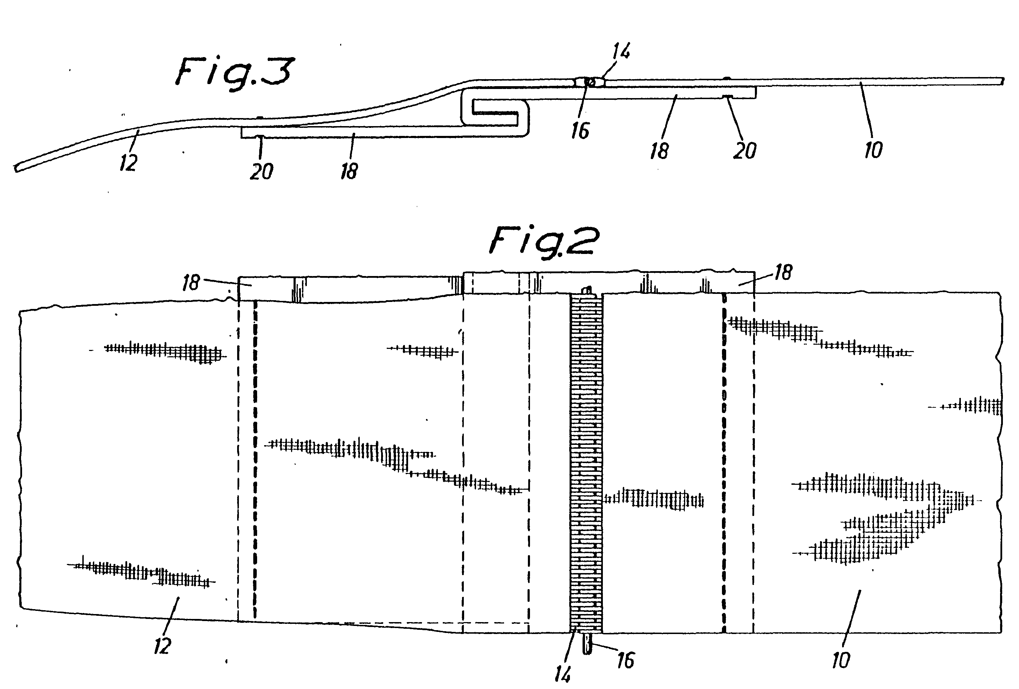

In accordance with the teachings of the subject invention temporary joining means 18 are arranged at the ends 10, 12 of the fabric to take the load off the fabric ends during the permanent end-joining operation. The temporary joining means 18 consist of two hook elements, one at each fabric end. Preferably, the hook elements are made from plastics and have a cross-sectional configuration including a flat portion and a U-shaped hook-like engagement portion (see Fig. 3). Preferably, the joining means 18 extend across the entire width of the belt.

The joining means 18 are formed with a thinner area 20 by means of which the joining means 18 are secured to the end portions 10, 12 of the fabric. The joining means 18 are sewn onto the fabric at this thinner zones 20, preferably by chain stitches. This makes it easy to remove the temporary joining means 18 from the fabric once they have served their purpose.

The loops 14 may be separate loops or hooks which are attached to the fabric ends 10, 12 or else they may be formed by the threads making up the fabric proper. They extend across the entire width of the fabric, forming one or several channels into which the locking pintle 16 is inserted.

The joining means 18 are arranged at the fabric ends in a manner and in a position ensuring that the permanent joint or seam will be positioned above the flat part of one of the joining means 18. The flat portion will thus serve as a base or support during the joining together of the fabric ends 10, 12 by means of the permanent joining means 14, 16. In this manner it also becomes easier to place the loops 14 in their correct relative positions and therefore also to effect the permanent joining-together of the fabric ends 10, 12. As apparent from Fig. 3, the permanent joint or seam is offset relative to the temporary seam.

Exchange of a fabric in papermaking machines with the aid of a device in accordance with the subject invention for joining together the ends of a fabric or belt is effected in the following manner. One end of the fresh fabric is attached to the end of the old fabric, which serves to advance the fresh fabric over one turn through the machine. The old fabric is removed and the U-shaped hooks of the temporary joining means 18 are arranged in interdigited position. The fabric area intermediate the two chain stitches 20 securing the temporary means 18 to the fabric is under no tension at all at this stage. The loops 14 are placed in intermeshed relationship and the locking pintle or seam connector 16 is introduced into the channel formed by the loops at the two fabric ends. After insertion of the pintle wire 16 the stitches 20 are removed, allowing the temporary joining means 18 to be separated from the fabric and the fresh fabric is thereafter ready for operation.

The embodiment as described in the aforegoing and illustrated in the drawings is to be regarded as an example only and a variety of modifications are possible within the scope of the appended claims. As mentioned previously, the loops 14, for instance, could be replaced by hook-like members or similar fastening means.

## Claims

1. A device for joining together the two ends (10, 12) of belts, said device comprising first means (14, 16) for permanent joining together of the belt ends, and second means (18) for temporary joining together of the belt ends (10, 12), said second means being positioned adjacent the belt ends and removably secured thereto, characterised in that said second means (18) consist of two intermeshing hook members each one of which comprises a flat portion, said flat portion provided at one of its ends with a U-shaped part by means of which the hook members engage each other.

2. A device according to claim 1, characterised in that the flat portion of one of the second, temporary joining means (18) serves as a support during the joining together of the fabric by means of the first, permanent fabric end joining means (14, 16).

3. A device designed particularly for joining together the ends (10, 12) of a textile belt the ends of which are provided with first means for joining together the belt ends permanently, said means being in the form of rows of loops (14), clamps, spirally wound elements or similar means which, when arranged in nesting or interdigited relationship, form at least one channel, whereupon the seam or joint is secured by introduction into the channel of at least one locking pintle wire (16) or seam fastener extending throughout the entire length of said channel or channels, according to claim 1, characterised in that the second means (18) are arranged in such a manner that the seam they form when joined together is offset relative to the seam formed by the first permanent joining means (14, 16), such that the seam formed by the first, permanent joining means (14, 16) will be positioned above the flat portion of one of the second joining means (18).

4. A device as claimed in any one of the preceding claims, characterised in that the second temporary joining means (18) comprise a thin section allowing stitches to be made in said second joining means (18) to attach said means to the belt.

## Patentansprüche

1. Vorrichtung zum Verbinden zweier Enden (10, 12) von Bändern miteinander, wobei diese Vorrichtung erste Mittel (14, 16) zum dauerhaften Verbinden der Bandenden miteinander und zweite Mittel (18) zum zeitweiligen Verbinden der Bandenden miteinander umfasst, wobei diese zweiten Mittel in Nähe der Bandenden angeordnet und daran lösbar befestigt sind, dadurch gekennzeichnet, dass diese zweiten Mittel (18) aus zwei ineinandergreifenden Hakenelementen bestehen, von denen jedes einen flachen Abschnitt umfasst, wobei dieser flache Abschnitt an einem seiner Enden mit einem U-förmigen Teil versehen ist, durch welches die Hakenelemente miteinander im Eingriff sind.

2. Vorrichtung nach Anspruch 1, dadurch gekennzeichnet, dass der flache Abschnitt eines der zweiten, zeitweilig verbindenden Mittel (18) während des Verbindens der Bandenden des Gewebes miteinander durch die ersten, dauerhaft verbindenden Mittel (14, 16) als Träger dient.

3. Vorrichtung, die besonders zum Verbinden der Enden (10, 12) eines Textilbands miteinander ausgebildet ist, wobei die Enden des Textilbands mit ersten Mitteln zum dauerhaften Verbinden der Bandenden miteinander versehen sind, wobei diese Mittel in Form von Reihen von Schlaufen, Klemmen, spiralgewundenen Elementen und dergleichen vorliegen, die mindestens einen Kanal bilden, wenn sie ineinanderliegend oder aneinandergreifend angeordnet sind, worauf der Saum oder die Verbindung durch Einführen von mindestens einem sich über die ganze Länge dieses Kanals oder dieser Kanäle erstreckenden Verriegelungsstiftdraht (16) oder Saumbefestiger in den Kanal befestigt ist, nach Anspruch 1, dadurch gekennzeichnet, dass die zweiten Mittel (18) auf solche Weise angeordnet sind, dass der von ihnen, wenn sie miteinander verbunden sind, gebildete Saum in bezug auf den von den ersten, dauerhaft verbindenden Mitteln (14, 16) gebildeten Saum versetzt ist, so dass der von den ersten, dauerhaft verbindenden Mitteln (14, 16) gebildete Saum oberhalb vom flachen Abschnitt eines des zweiten verbindenden Mitteln (18) zu liegen kommt.

4. Vorrichtung nach einem der vorangehenden Ansprüche, dadurch gekennzeichnet, dass die zweiten, zeitweilig verbindenden Mittel (18) einen dünnen Abschnitt umfassen, der ermöglicht, in diese zweiten verbindenden Mittel (18) Nahtstiche zu machen, um diese Mittel auf das Band zu befestigen.

## Revendications

1. Dispositif pour joindre l'une à l'autre les deux extrémités (10, 12) de bandes, ce dispositif comprenant des premiers moyens (14, 16) pour joindre l'une à l'autre de façon permanente les deux extrémités de bande, et des deuxièmes moyens (18) pour joindre l'une à l'autre de façon temporaire les deux extrémités (10, 12) de bande, ces deuxièmes moyens étant placés en position adjacente aux extrémités de bande et fixés à celles-ci de façon amovible, caractérisé en ce que ces deuxièmes moyens (18) consistent en deux éléments à crochets en prise l'une sur l'autre et dont chacun comporte une partie plate, cette partie plate étant pourvue en l'une de ses extrémités d'une pièce en forme de U au moyen de laquelle les éléments à crochets entrent en prise l'un sur l'autre.

2. Dispositif selon la revendication 1, caractérisé en ce que la partie plate de l'un des deuxièmes moyens (18) de jonction temporaire sert de support pendant que l'on joint l'une à l'autre les extrémités du tissu au moyen des premiers moyens (14, 16) de jonction permanente d'extrémités de tissu.

3. Dispositif agencé plus particulièrement pour joindre l'une à l'autre les extrémités (10, 12) d'une bande en textile dont les extrémités sont pourvues de premiers moyens pour joindre l'une à l'autre de façon permanente les extrémités de la bande, ces moyens étant en forme de rangées de boucles (14), pinces, éléments spiralés ou moyens similaires qui forment au moins un canal lorsqu'ils sont disposés de façon à être logés ou crochetés l'un dans l'autre, après quoi l'ourlet ou joint est fixé en introduisant dans le canal au moins un fil (16) formant broche de verrouillage ou un fixateur d'ourlet qui s'étend sur toute la longueur de ce canal ou de ces canaux, selon la revendication 1, caractérisé en ce que les deuxièmes moyens (18) sont disposés de manière que l'ourlet qu'ils forment lorsqu'ils sont joints l'un à l'autre est décalé par rapport à l'ourlet formé par les premiers moyens (14, 16) de jonction permanente, de façon que l'ourlet formé par les premiers moyens (14, 16) de jonction permanente se trouve placé au-dessus de la partie plate de l'un des deuxièmes moyens (18) de jonction.

4. Dispositif selon l'une quelconque des revendications précédentes, caractérisé en ce que les deuxièmes moyens (18) de jonction temporaire comportent une section mince qui permet de faire des points de couture dans ces deuxièmes moyens (18) pour fixer ceux-ci à la bande.

# Fig.1

0 118 406

Fig.3

Fig.2

0 118 406